# EUROPEAN PATENT SPECIFICATION

(11) **EP 1 949 805 B1**
(45) Date of publication and mention of the grant of the patent: **01.05.2019**
(21) Application number: 07025150.9
(22) Date of filing: 27.12.2007
(51) Int. Cl.: B26D 1/03, B26D 5/02, B26D 7/01, B26D 7/06

(54) **Device for cutting elongated products such as vegetables or fruit**
Vorrichtung zum Schneiden verlängerter Produkte, wie z.B. Gemüse oder Obst
Dispositif pour couper des produits allongés tels des légumes ou des fruits

(30) Priority: 02.01.2007 NL 1033156
(43) Date of publication of application: 30.07.2008
(73) Proprietor: Sormac B.V., 5916 PN Venlo (NL)
(72) Inventor: Haffmans, Hubertus Ernest Ferdinand Marie, 5911 EE Venlo (NL)
(74) Representative: Algemeen Octrooi- en Merkenbureau B.V.

(56) References cited:
- DE-A1- 3 605 639
- GB-A- 744 306
- GB-A- 854 332
- US-A- 5 169 663

## Description

The invention relates to a device for cutting elongated products such as vegetables or fruit comprising a conveyor table via which the products can be moved by means of partition plates moving over the conveyor table thereby carrying along an elongated product, and at least one cutting element projecting above the surface of the transporting table. Such a device is generally familiar.

During the operation of such a device the problem can occur that the product is not cut along a line parallel to the direction of movement over the partition plates.

This is caused by the fact that natural products, such as carrots, are involved which are of a shape that is not constant enough. When such a product is pressed against a cutting element this can bring about a turning movement as a result of which the product comes to rest at an angle to the partition plate causing an oblique cut. This problem occurs in the case of carrots for example, when removing the tail, as the other end, the leaf end, is of a rounded shape which easily allows turning to take place.

GB 854.332 and GB 744.306 together disclose a conveyor system comprising co-axial sprockets which are so arranged that by the time a cradle of a first conveyor is about to tilt downwardly around the outer sprockets, the central part of any vegetable resting therein will have been received in the "V" notches of a carrier member which is moving up to the operative run of the second conveyor, the vegetable thus continuing in the same horizontal direction albeit at a somewhat higher level. Such vegetable, however, will not be engaged by a spring of the preceding carrier member of the second conveyor until its own carrier member has passed clear of the central sprocket. Further, this document discloses that the conveyor system comprises a mechanism intended to avoid any risk of the vegetable shifting during the critical period of transfer from the first conveyor to the conveyor.

The aim of the invention is to create a device of the above type in which the said disadvantages are avoided.

This aim is achieved in accordance with the device as specified in claim 1 in that in the direction of movement of the products a retaining element is arranged that can be moved between two positions, a first position where it projects above the surface of the conveyor table and a position where it is completely below the surface of the conveyor table and in that the retaining element is mounted on a rotating manner, so as to move by the pressure exerted by the elongated product on the retaining element (60) from the first position to the second position and second means are
present to move the retaining element from the second position to the first position.

By applying the retaining element in the correct place rotation of the product can be avoided, while in the second position the further conveying of the product is not hindered. This only requires the second means to be activated at the right moment.

Other features and advantages will be explained on the basis of the following description whereby reference is made to the attached drawings, in which:
Fig. 1 shows a side view of a device in accordance with the invention,
Fig. 2 shows a top view of the device in accordance with figure 1,
Fig. 3 shows a schematic, lateral cross-section of a section of the conveyor and cutting mechanism of the device in accordance with figure 1,
Fig. 4 shows a tope view of a partition plate as used in the conveying mechanism of the device in accordance with figure 1,
Fig. 5 shows a front view of the partition plate in accordance with figure 4,
Fig. 6 shows a schematic lateral cross-section of the removal section of the device in accordance with figure 1,
Fig. 7 shows a top view of the removal section shown in figure 4
Fig. 8 shows a schematic side view of a retaining element as used in accordance with the invention in the device according to figure 1,
Fig. 9 shows a side view of the retaining element shown in figure 6, and
Fig. 10A and 10B show schematic side views of the cutting element in accordance with the invention in the active position and the inactive position as used in the invention in accordance with figure 1.

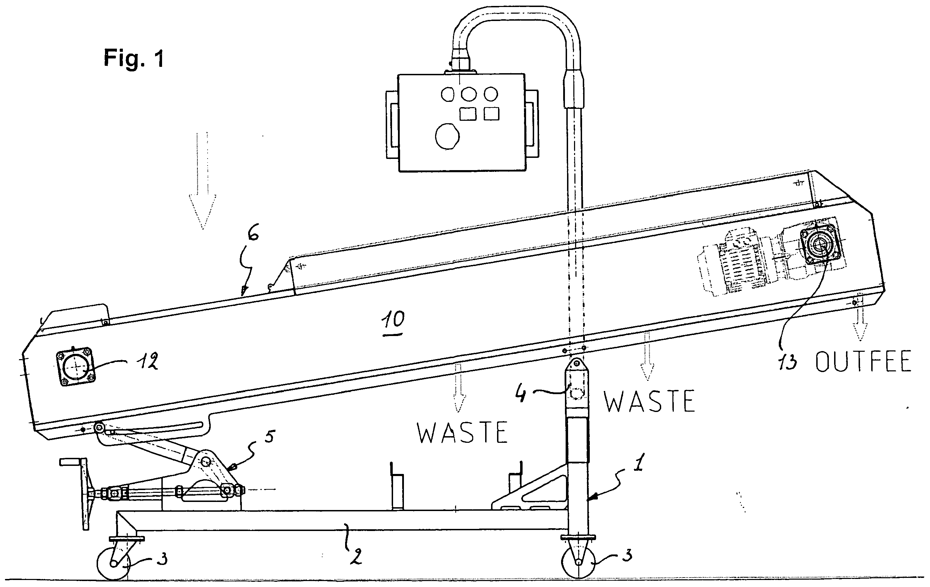

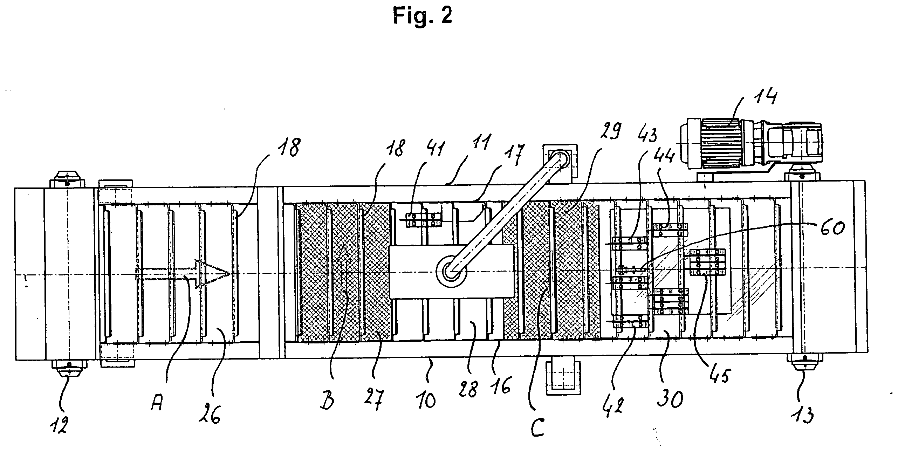

The device in accordance with the invention as shown in figures 1 and 2 comprises a support 1, which in the illustrated form of embodiment forms a movable entity. The support 1 has a rectangular frame section 2 that is supported by a number of castors 3. On a short side of the frame section 2 there is a vertical support 4, the height of which can be adjusted by means of a known telescopic construction. A second support element 5 is mounted close to the other short side of the frame section 2. The support element 5 is of a type that can also be height-adjusted, The form of embodiment shown in the drawing will not be described further here, but the possible designs are adequately known to a person skilled in the art and as such do not constitute part of the invention.

The actual device 6 for cutting elongated products is mounted on the support elements 4 and 5. The device 6 comprises two parallel essentially rectangular frame plates 10 and 11 with which the device is connected in a hinged manner with the support elements 4 and 5.

The parallel frame plates 10 and 11 are connected to each other in a suitable manner by way of a number of cross connections, which are not shown, in such a way that this forms a structural frame of an adequate rigidity.

Close to the short sides of the rectangular frame plates which are essentially vertically orientated, there is also an axle 12, 13 which is borne in a rotating manner. Mounted on axle 12 are two sprocket wheels and on axle 13 also two sprocket wheels. One sprocket wheel on axle 12 and one sprocket wheel on axle 13 is mounted in parallel to and close to the frame plate 11, whereby two sprocket wheels therefore lie in one plane. In the same way the other sprocket wheel on axle 12 and 13 respectively is positioned close to and in parallel to frame plate 10, whereby these sprocket wheels also lie in one plane. Axle 13 can be driven in a rotating manner by means of a motor 14.

A chain 16, 17 is placed over each pair of sprocket wheels in the same plane whereby the two chains 16, 17 can move completely synchronously.

Between the two chains 16, 17 and perpendicular to the plane of the frame plates 10, 11 a number of partition plates 18 are mounted.

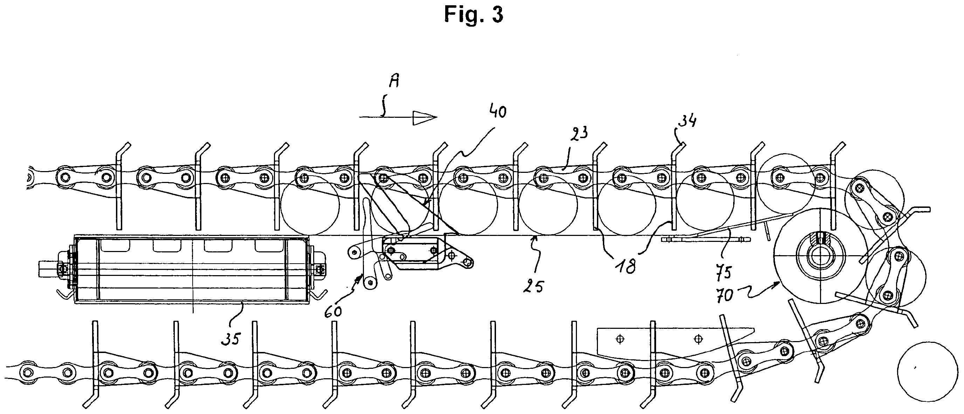

Each partition plate 18 (see figures 3, 4 and 5) consists of a plate-like section 19 of a largely rectangular shape. Close to each short edge a section of the place-like section 19 is cut away and the remaining section 20, 21 is bent at an angle of 90° to form plate sections 22 and 23 respectively.

Via the plate sections 22 and 23 each partition plate is attached to and between the chains 16, 17 whereby one partition plate 18 is attached for every two links of each chain.

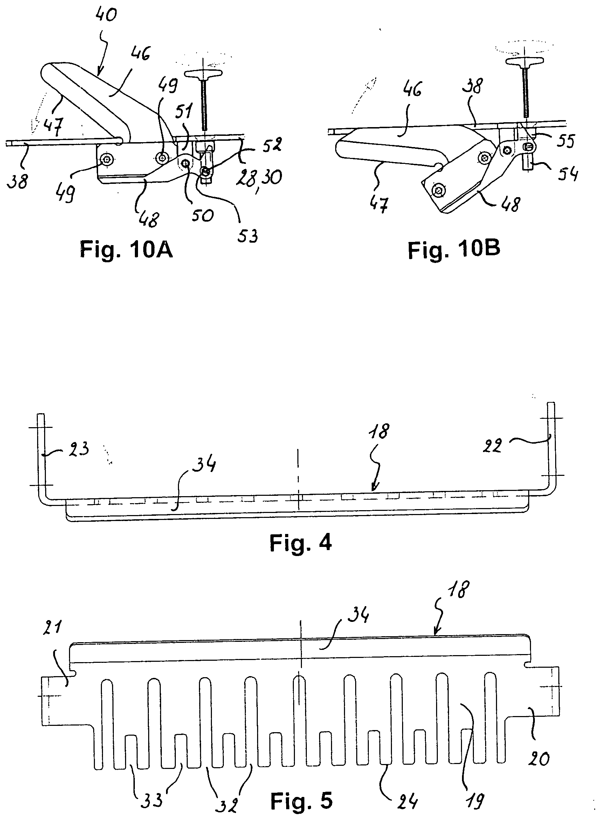

As shown in figure 5 the edge 24 which hereinafter will be referred to as the lower edge of the partition plate 18 is provided with a number of recesses 32, 33 a first type of rectangular recesses 32 a short side of which coincides with the lower edge 24 and which extend over almost the entire height of the plate-like section 19, and a second type of rectangular recesses 33 with the same orientation but of lesser height than the recesses 32. The function of the recesses will be explained later.

The upper edge 34 of the plate-like section 19 is bent over an angle of approximately 45°, but in a direction opposite to the direction of the bent sections 22 and 23 as is clearly shown in figure 3.

In the upper part of the path of movement of the chains 16, 17 the lower edges 24 of the partition plates 18 therefore run in a straight path whereby in this section a support surface 25 is formed just under the lower edge 24 of the partition plates 18 extending over almost the entire length of the straight-line section of the upper part of the chains 16, 17.

The support 25 is in fact formed by a combination of the solid plates and lateral conveying devices.

In figure 2 arrow A shows the normal direction of movement of the chains 16, 17 with the partition plates 18 for the upper part of the chains 16, 17. The support surface 25 is seen in this direction of movement consecutively formed by a fixed plate 26, a lateral conveying device 27, a fixed plate 28, a lateral conveying device 29 and a fixed plate 30. The fixed plates 26, 28 and 30 are mounted between the frame plates 10,11.

The cross conveying devices 27 and 29 are in principal identical and serve to transport the elongated products in the direction of one of the frame plates 10 or 11. In the illustrated form of embodiment the device 27 transports the products in the direction of plate 11 as shown by the arrow B in figure 2, while the device 29 transports the products in the direction of plate 10 as shown by arrow C in figure 2.

In its simplest form of embodiment each cross conveying device 27 and 29 consists of two parallel rollers with an axial line perpendicular to the surface of the partition plates in the upper part of the chains 16, 17 and a conveyor belt 35 (see figure 3) is applied over these rollers. By driving one of these rollers the belt can be moved in two directions taking with it the product located thereon.

In another form of embodiment of the cross conveying device a vibrating plate is used which moves the product lying on it in a certain direction.
Such a solution can be beneficial if the product has a tendency to adhere to the partition plates 18 and thereby hindering cross conveying.

Cutting elements 40 can be provided in the support surface 25, and in particular in the support plates 28 and 30. More particularly a cutting element in the support plate 28 should serve to cut off one of the ends of the elongated product when it is moved over it through the movement of the partition plates 18. A first cutting element 42 in the support plate 30 can serve to cut off the other end of the elongated product, while the other cutting elements 43, 44, 45, if present, serve to cut into pieces the elongated product being moved over the support plate 30 by means of the movement of the partition plates 18.

In principle the various cutting elements are identical and designed as shown in more detail in figures 10 A and 10 B, where the cutting element 40 is shown in greater detail.

The cutting element 40 comprises a blade 46 with a cutting edge 47 which in the active position of the cutting element 40 as shown in figure 10 A projects above the support plate 28 or 30, and whereby the cutting edge 47 forms a sharp angle with the upper surface of the support plate 28 or 30. The blade 46 lies in a plane that is perpendicular to the surface of the partition plates 18 in the upper part of the chains 16, 17.

Thus, an elongated product that is pushed by a partition plate 18 against the cutting edge 47, whereby as a rule the product lies lengthways in parallel with the upper surface of the partition plate 18, is cut through by the cutting element 40.

In each cutting element 40 the blade 46 projects through a slit 38 in the fixed plate 28 or 30 and is attached under the fixed plate to a holder 48, by means of bolts 49 for example. The holder 48 is designed as a double-wall lever arm attached in an articulated manner to the underside of the support plate 28 or 30 by way of hinge pin 50 and a cam 51. The other end of the double-wall lever arm is provided with a pair of slotted holes 52. A nut is provided with two diametrically opposed pins 53 that fit into these slotted holes 52. The nut is screwed on the thread of a screw 54, said screw 54 being introduced into the support plate 28 or 30 whereby the threaded parts projects downwards. The part of the screw 54 close to the head is free of threading and ring 55 is applied hereon so that the screw 54 can turn but not be moved in the axial direction of the screw. The screw 55 is for example a hexagon-type screw with a conical head so that the head is sunk into the upper surface of the fixed plate 28, 30.

By turning the screw 54 in one or the other direction the nut with the pins 53 is moved along the axial line of the screw. In this way the double-wall lever arm 48 is turned as a result of which the blade 46 is moved up or down. By using fixed stops connected to the lever 49 the blade 46 with the cutting edge 47 can be position completely above the support plate 28, 30 as shown in figure 10 A or completely below the support plate 28, 30 as shown in figure 10 B.

In this way each cutting element can be moved into either an active position or into an inactive position. Thus it is easily possible to adjust the cutting of elongated products depending on the required end product.

In the case of carrots for example the top and the tail may be required to be cut off and each carrot cut into short pieces. In this case the cutting elements 43, 44 are 45 are activated by rotating the relevant blade completely above the fixed plate 30. If on the other hand only the top and tail of the carrots are to be removed all the cutting elements 43, 44 and 45 are moved to the inactive position while cutting elements 41 and 42 are moved into the active position. Of course many variations are possible depending on the position of the cutting elements 43, 44 en 45. In this way the length of the cut pieces can be easily varied by moving the correct cutting element into the active position and the remainder into the inactive position

While being conveyed by the partition plates 18 over the support plate 25 an elongated product will encounter a number of cutting elements. The product will be pushed on by a partition plate. However the product does not have a perfect geometric shape as natural products, such as carrots are often involved.

Such a product does not have a perfect cylindrical form and also no flat ends. The resistance to the movement of the product caused by a cutting element can give rise to turning of the product in the compartment formed by two consecutive partition plates 18 between which the product is located.

In the case of carrots it can happen that as a result of the orientation of the product in its compartment the top is first cut off. The product can then turn about the tail resulting in oblique cutting off of the top. This is undesirable as it results in less uniform end products.

In order to lessen this problem a retaining element 60 that can be swung away is arranged close to a number of cutting elements seen in the direction of movement of the chains.

The retaining element 60 comprises a three-arm lever arm 61. The lever arm 61 has two arms 62, 63 that are extensions of each other and an arm 64 that is perpendicular to these two arms.

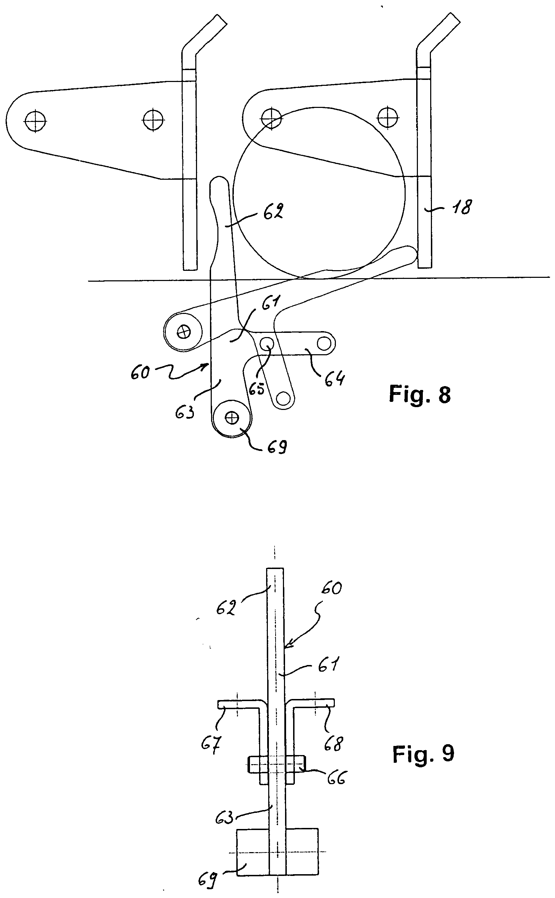

The arm 64 has a drilled hole 65 in which a pin 66 is inserted which at its other side is rotatably borne in two brackets 67 and 68 mounted on the underside of one of the fixed plates 28, 30. The arm 62 projects upwards through a slot in the fixed plate 28 or 30 up to a height that approximately corresponds to the diameter of the elongated product. The arm 63 is either of sufficient length or carries, as shown in figures 8 and 9, a weight 69 whereby in the absence of external forces the lever 61 is always in the position shown in figure 8 and returns to this position.

If an elongated product is pushed by a partition plate 18 against a retaining element 60 the movement of the product experiences some resistance. The magnitude of the resistance may also be adjusted via the size of the weight 69. By correctly positioning the retaining element 60 and a cutting element 40 the retaining force exerted by the cutting element 40 can be compensated for by the retaining force of the retaining element 60.

In the device in accordance with the invention the processed and cut products are removed close to the point where the chain wheels are positioned on axle 13. In this curve described by the chains 16, 17 the partition plates 18 become closer to each other on the inside and further apart on the outside. If the product is to be moved further in straight line, for example in the plane of the support surface 25, there is a risk of it being crushed or deformed between two consecutive partition plates.

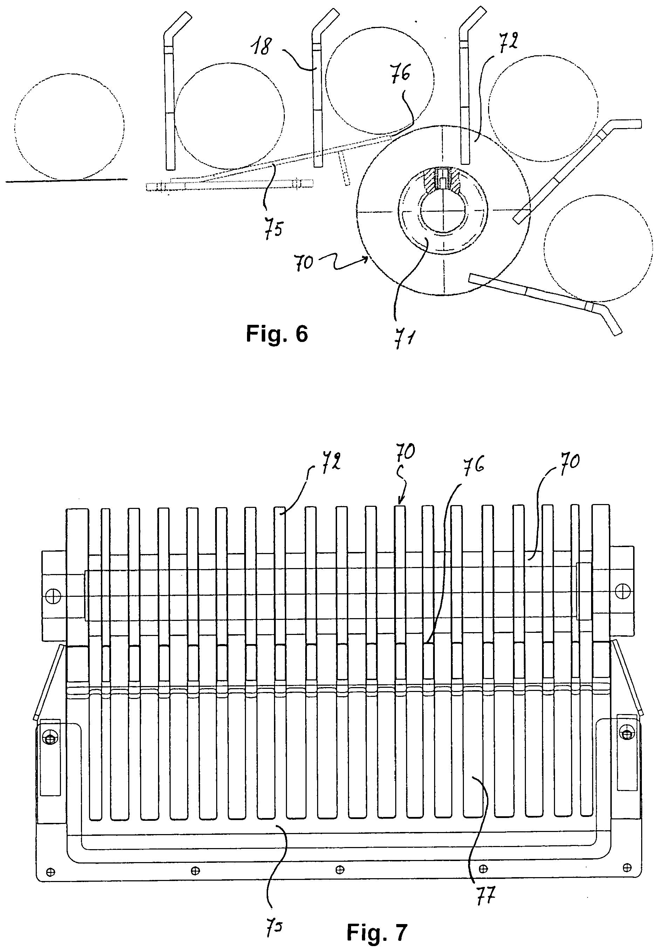

In order to minimise or avoid this product a disk roller is mounted on the axle 13 between the two sprocket wheels which is driven together with the sprocket wheels. The disk roller 70 consists of a cylindrical tube 71 on which, seen in the axial direction, a number of cylindrical disks 72 are arranged at equal intervals along the axial line of axle 13. The diameter of the disks 72 is selected to that the outer circumference of the disk roller projects to a certain height above the plane of the support surface 25 as is clearly shown in figures 3 and 6.

Between the support plate 30 and the circumference of the disk roller 70 a plate 75 is provided at such an angle that the product moved by a partition plate 18 is taken from the plane of the support surface to the circumference of the disk roller 70.

The plate 75 is not a full plate and at the edge 76 facing the disk roller 70 is provided with a number of rectangular and parallel notches 77.

These notches 76 correspond with the space between the disks 72 which in turn correspond to the recesses 32, 33 in the partition plates 18 so that the movement of the partition plates 18 is not hindered by the plate 75 or the disk roller 70. Due to the presence of the disk roller 70 with the plate 75 the elongated products are tilted upwards in their compartment so that they cannot be crushed between the partition plates 18 of their compartment. They are also moved with regard to the partition plate pushing the product along so that adhesion to the partition plate is broken and the product can roll more easily out of the compartment.

The recesses 32 and 33 in the partition plate 18 are necessary for the movement of the partition plate 18 along the plate 75 and disk roller 70. The recesses 32 are larger to allow the passage of the cutting elements and/or the retaining elements. The presence of the recesses 33 is necessary so that the disk roller 70 has sufficient disks so that elongated products cut into small pieces can be correctly conveyed further.

The device operates as follows.

The chain wheels are driven via the motor 14 so that the chains 16, 17 together with the partition plates 18 in the upper part move in the direction of the arrow A. Each compartment, formed by two neighbouring partition plates, moves from the zone formed by the fixed plate 26 over the cross conveying device 27, the fixed plate 28, the cross conveying device 29 and the fixed plate 30. In the zone of the fixed plate 26 an elongated product, for example a carrot, is placed in each compartment. This generally takes place manually but can in principle also be automated. The elongated product is carried along by a partition plate 18 and reaches the cross conveying device 27 zone. The elongated product is moved in the direction of arrow B until one end comes into contact with a stop, formed for example by section 23 of the partition plate 18. In this position the elongated product reaches the zone of the support plate 28. Here the product is pressed against the cutting element 41 and the end there is cut off. It is irrelevant if this is the head or tail. The product may also be retained by a retaining element 60 which is located more centrally in this zone. The edge 34 can form a securing device so that the product is not pushed upwards.

The elongated product then reaches the cross conveying device 29 zone where the product is moved in the direction of arrow C. Here the second end comes into contact with a lateral stop. In the following zone corresponding to the fixed plate 30 the second end is cut off by means of cutting element 42. A retaining element 60 may be present, but a number of cutting elements 43 may also be present in the active position which cut the product up further. This can be repeated with cutting elements 44 and 45. Only some of the cutting elements 43, 44 or 45 may be active, or none of these, so that various types of end product can result.

The obtained end product is removed via plate 75 and disk roller 76 to a collection system that is not described in more detail.

It is clear that the invention is not restricted to the described and illustrated form of embodiment, but within the framework of the description and claims numerous modifications can be made that form part of the invention as defined in the appended claims.

## Claims

1. Device (6) for cutting elongated products such as vegetables or fruit comprising a conveyor table having a support surface (25) over which the products can be moved by means of partition plates (18) moving over the conveyor table taking with them an elongated product, and at least one cutting element (40) that projects above the surface (25) of the conveyor table, wherein seen in the direction of movement of the products, at least one retaining element (60) is arranged that can be moved between two positions, a first position where it projects above the surface (25) of the conveyor table and a position where it is completely below the surface of the conveyor table, **characterised in that** the retaining element is mounted on a rotating manner so as to move by the pressure exerted by the elongated product on the retaining element (60) from the first position to the second position and means are present to move the retaining element from the second position to the first position.

2. Device (6) in accordance with claim 1 **characterised in that** the retaining element (60) is mounted in a rotating manner about an axle and the means comprise a counterweight (69) that pushes the retaining element into the first position.

3. Device (6) in accordance with any one of claims 1 - 2 **characterised in that** the conveyor table is provided with at least one cross conveyor (27; 29) which conveys the elongated product perpendicularly to the direction of movement of the product.

4. Device (6) in accordance with claim 3 **characterised in that** two cross conveyors (27, 29) are provided which bring about a movement in two opposite directions and which seen in the direction of movement of the product are arranged one behind the other.

5. Device (6) in accordance with claims 3 and 4 **characterised in that** seen in the direction of movement of the products immediately after the cross conveyor at least one cutting element (40) and at least one retaining element (60) are provided and that the cutting element is close to a longitudinal section of the conveyor table against which the product is pressed by the cross conveyor.

6. Device (6) in accordance with any one of the preceding claims **characterised in that** the cutting element comprises a blade (46) that projects upwards through a slit (38) in the conveyor table and is attached under the conveyor table to a support element (48) that is rotatably attached to the table about an axle, and that means are present to rotate the cutting element between two positions, a first position in which the cutting element projects above the table and a second position in which the cutting element is located completely below the table surface.

7. Device (6) in accordance with claim 6 **characterised in that** the means for rotating the cutting element comprise a screw (55) sunk into the table surface, the screw thread end of which interacts with the support element (48).

8. Device (6) in accordance with claim 7 **characterised in that** the support element is connected to a nut that interacts with the screw thread.

9. Device (6) in accordance with any one of the preceding claims **characterised in that**, the side of each partition plate (18) facing the table surface (25) is provided with recesses.

10. Device (6) in accordance with claim 1 - 9 **characterised in that** seen in the direction of movement of the products, close to the end of the conveyor table a removal plate (75) is applied which forms a sharp angle to the surface (25) of the conveyor table, and which is provided with recess that complement the recesses (32) in the partition plates (18).

11. Device (6) in accordance with claim 10 **characterised in that** after the removal plate there is a roller (76) provided with radial recess that correspond with the recesses in the removal plate.

12. Device (6) in accordance with claim 5 - 11 **characterised in that** the cross conveyor comprises a vibrating plate.

## Patentansprüche

1. Vorrichtung (6) zum Schneiden länglicher Produkte, wie z. B. Gemüse oder Obst, umfassend einen Fördertisch, der eine Stützfläche (25) aufweist, über welche die Produkte mithilfe von Trennplatten (18) bewegt werden können, die sich über den Fördertisch bewegen und dabei ein längliches Produkt mit sich führen, sowie mindestens ein Schneidelement (40), das über die Fläche (25) des Fördertisches hinausragt, wobei, in der Bewegungsrichtung der Produkte gesehen, mindestens ein Halteelement (60) angeordnet ist, das zwischen zwei Positionen - einer ersten Position, in der es über die Fläche (25) des Fördertisches hinausragt, und einer Position, in der es sich vollständig unterhalb der Fläche des Fördertisches befindet, - bewegt werden kann, **dadurch gekennzeichnet, dass** das Halteelement auf drehbare Weise montiert ist, um durch den Druck, der von dem länglichen Produkt auf das Haltelement (60) ausgeübt wird, aus der ersten Position in die zweite Position bewegt zu werden, und Mittel vorhanden sind, um das Halteelement aus der zweiten Position in die erste Position zu bewegen.

2. Vorrichtung (6) nach Anspruch 1, **dadurch gekennzeichnet, dass** das Halteelement (60) um eine Achse drehbar montiert ist und die Mittel ein Gegengewicht (69) umfassen, welches das Halteelement in die erste Position drückt.

3. Vorrichtung (6) nach einem der Ansprüche 1 bis 2, **dadurch gekennzeichnet, dass** der Fördertisch mit mindestens einem Querförderer (27; 29) versehen ist, welcher das längliche Produkt senkrecht zu der Bewegungsrichtung des Produkts fördert.

4. Vorrichtung (6) nach Anspruch 3, **dadurch gekennzeichnet, dass** zwei Querförderer (27; 29) vorgesehen sind, die eine Bewegung in zwei entgegengesetzte Richtungen herbeiführen, und die, in der Bewegungsrichtung des Produkts gesehen, hintereinander angeordnet sind.

5. Vorrichtung (6) nach Anspruch 3 und 4, **dadurch gekennzeichnet, dass**, in der Bewegungsrichtung der Produkte gesehen, unmittelbar nach dem Querförderer mindestens ein Schneidelement (40) und mindestens ein Halteelement (60) vorgesehen sind, und dass sich das Schneidelement in der Nähe eines Längsschnitts des Fördertisches befindet, gegen welchen das Produkt durch den Querförderer gedrückt wird.

6. Vorrichtung (6) nach einem der vorangegangenen Ansprüche, **dadurch gekennzeichnet, dass** das Schneidelement eine Klinge (46) umfasst, die durch einen Schlitz (38) im Fördertisch nach oben herausragt und unter dem Fördertisch an einem Stützelement (48) angebracht ist, welches um eine Achse drehbar an dem Tisch angebracht ist, und dass Mittel vorhanden sind, um das Schneidelement zwischen zwei Positionen - einer ersten Position, in welcher das Schneidelement über den Tisch hinausragt, und einer zweiten Position, in welcher sich das Schneidelement vollständig unterhalb der Fläche des Tisches befindet, - zu drehen.

7. Vorrichtung (6) nach Anspruch 6, **dadurch gekennzeichnet, dass** die Mittel zum Drehen des Schneidelements eine Schraube (55) umfassen, die in die Tischfläche versenkt ist, deren Schraubgewindeende mit dem Stützelement (48) wechselwirkt.

8. Vorrichtung (6) nach Anspruch 7, **dadurch gekennzeichnet, dass** das Stützelement mit einer Mutter verbunden ist, die mit dem Schraubgewinde wechselwirkt.

9. Vorrichtung (6) nach einem der vorangegangenen Ansprüche, **dadurch gekennzeichnet, dass** die Seite von jeder Trennplatte (18), die zur Tischfläche (25) zeigt, mit Aussparungen versehen ist.

10. Vorrichtung (6) nach Anspruch 1 bis 9, **dadurch gekennzeichnet, dass**, in der Bewegungsrichtung der Produkte gesehen, in der Nähe des Endes des Fördertisches eine Entnahmeplatte (75) eingesetzt wird, die einen spitzen Winkel mit der Fläche (25) des Fördertisches bildet und die mit einer Aussparung versehen ist, welche die Aussparungen (32) in den Trennplatten (18) ergänzt.

11. Vorrichtung (6) nach Anspruch 10, **dadurch gekennzeichnet, dass** nach der Entnahmeplatte eine Rolle (76) mit einer radialen Aussparung vorgesehen ist, die den Aussparungen in der Entnahmeplatte entspricht.

12. Vorrichtung (6) nach Anspruch 5 bis 11, **dadurch gekennzeichnet, dass** der Querförderer eine Vibrationsplatte umfasst.

## Revendications

1. Dispositif (6) pour couper des produits allongés tels que des légumes ou des fruits comprenant une table de transport ayant une surface de support (25) sur laquelle les produits peuvent se déplacer au moyen de plaques de séparation (18) se déplaçant sur la table de transport emportant avec elles un produit allongé, et au moins un élément de coupe (40) qui fait saillie au-dessus de la surface (25) de la table de transport, où, vu selon la direction de déplacement des produits, au moins un élément de retenue (60) est agencé de manière à pouvoir se déplacer entre deux positions, une première position où il fait saillie au-dessus de la surface (25) de la table de transport et une position où il se trouve complètement en dessous de la surface de la table de transport, **caractérisé en ce que** l'élément de retenue est monté de manière rotative afin de se déplacer par la pression exercée par le produit allongé sur l'élément de retenue (60) de la première position à la deuxième position et des moyens sont présents pour déplacer l'élément de retenue de la deuxième position à la première position.

2. Dispositif (6) selon la revendication 1, **caractérisé en ce que** l'élément de retenue (60) est monté de manière rotative autour d'un axe et les moyens comprennent un contrepoids (69) qui pousse l'élément de retenue vers la première position.

3. Dispositif (6) selon l'une quelconque des revendications 1 et 2, **caractérisé en ce que** la table de transport est munie d'au moins un transporteur transversal (27; 29) qui transporte le produit allongé perpendiculairement à la direction de déplacement du produit.

4. Dispositif (6) selon la revendication 3, **caractérisé en ce que** deux transporteurs transversaux (27, 29) sont fournis, lesquels transporteurs entraînent un déplacement dans deux directions opposées et, vu selon la direction de déplacement du produit, sont agencés l'un derrière l'autre.

5. Dispositif (6) selon les revendications 3 et 4, **caractérisé en ce que**, lorsqu'on regarde dans la direction de déplacement des produits immédiatement après le transporteur transversal, au moins un élément de coupe (40) et au moins un élément de retenue (60) sont fournis et **en ce que** l'élément de coupe est proche d'une section longitudinale de la table de transport contre laquelle le produit est pressé par le transporteur transversal.

6. Dispositif (6) selon l'une quelconque des revendications précédentes, **caractérisé en ce que** l'élément de coupe comprend une lame (46) qui fait saillie vers le haut à travers une fente (38) dans la table de transport et est fixée sous la table de transport à un élément de support (48) qui est fixé en rotation à la table autour d'un axe et **en ce que** des moyens sont présents pour faire tourner l'élément de coupe entre deux positions, une première position dans laquelle l'élément de coupe fait saillie au-dessus de la table et une deuxième position dans laquelle l'élément de coupe est situé complètement en dessous de la surface de table.

7. Dispositif (6) selon la revendication 6, **caractérisé en ce que** les moyens de rotation de l'élément de coupe comprennent une vis (55) enfoncée dans la surface de table, dont l'extrémité de filetage de vis coopère avec l'élément de support (48).

8. Dispositif (6) selon la revendication 7, **caractérisé en ce que** l'élément de support est relié à un écrou qui coopère avec le filetage de vis.

9. Dispositif (6) selon l'une quelconque des revendications précédentes, **caractérisé en ce que** le côté de chaque plaque de séparation (18) faisant face à la surface de table (25) est muni d'évidements.

10. Dispositif (6) selon les revendications 1 à 9, **caractérisé en ce que**, vu selon la direction de déplacement des produits, près de l'extrémité de la table de transport, une plaque de retrait (75) est appliquée, laquelle plaque forme un angle aigu avec la surface (25) de la table de transport, et est munie d'un évidement qui est complémentaire aux évidements (32) dans les plaques de séparation (18).

11. Dispositif (6) selon la revendication 10, **caractérisé en ce que**, après la plaque de retrait, il existe un rouleau (76) muni d'un évidement radial qui correspond aux évidements dans la plaque de retrait.

12. Dispositif (6) selon les revendications 5 à 11, **caractérisé en ce que** le transporteur transversal comprend une plaque vibrante.
